# EUROPÄISCHE PATENTANMELDUNG

(11) **EP 3 964 732 A1**
(43) Veröffentlichungstag der Anmeldung: **09.03.2022**
(21) Anmeldenummer: 21173284.7
(22) Anmeldetag: 11.05.2021
(51) Int. Cl.: F16H 57/025, F23K 3/00

(54) **3-PUNKT DREHMOMENTSTÜTZE**

(30) Priorität: 04.09.2020 WO PCT/EP2020/074826
(71) Anmelder: SL-Technik GmbH, 5120 St. Pantaleon (AT)
(72) Erfinder: SOMMERAUER, Thilo, 5120 St. Pantaleon (AT)
(74) Vertreter: Kuhnen & Wacker Patent- und Rechtsanwaltsbüro PartG mbB

(57) **Zusammenfassung**

Drehmomentstütze (1) für eine Transporteinrichtung für Brennstoffe einer Biomasse-Heizanlage, welche das Folgende aufweist: eine Basisplatte (8) mit drei Schenkeln (1a, 1b, 1c) und drei Seiten (6); wobei die Basisplatte (8) eine Achsöffnung (7) zur Durchführung einer angetriebenen Achse (15) aufweist; wobei die Basisplatte eine Mehrzahl von Befestigungslöchern (5) zur Befestigung eines Antriebs (13) aufweist; wobei jeder der Schenkel (1a, 1b, 1c) ein Aufnahmeloch (3a) zur Aufnahme eines Befestigungselements zur abtriebseitigen Befestigung an einer Tragstruktur (11, 21) aufweist.

## Beschreibung

### TECHNISCHES GEBIET

Die Erfindung betrifft eine 3-Punkt Drehmomentstütze für eine Zellenradschleuse oder einer Raumaustragungsvorrichtung einer Biomasse-Heizanlage.

### STAND DER TECHNIK

Biomasse-Heizanlagen, insbesondere Biomasse-Kessel, in einem Leistungsbereich von 20 bis 500 kW sind bekannt. Biomasse kann als ein günstiger, heimischer, krisensicherer und umweltfreundlicher Brennstoff angesehen werden. Als verfeuerbare Biomasse beziehungsweise als biogene Festbrennstoffe gibt es beispielsweise Hackgut oder Pellets.

Die Pellets bestehen meistens aus Holzspänen, Sägespänen, Biomasse oder anderen Materialien, die in kleine Scheiben oder Zylinder mit einem Durchmesser von ca. 3 bis 15 mm und einer Länge von 5 bis 30 mm verdichtet worden sind. Hackgut (auch als Holzschnitzel, Holzhackschnitzel oder Hackschnitzel bezeichnet) ist mit schneidenden Werkzeugen zerkleinertes Holz.

Biomasse-Heizanlagen für Brennstoffe in Form von Pellets und Hackgut weisen im Wesentlichen einen Kessel mit einer Brennkammer (der Verbrennungsraum) und mit einer daran anschließenden Wärmetauschvorrichtung auf. Regelmäßig ist verschiedenes Zubehör vorhanden, wie beispielsweise Brennstoff-Fördereinrichtungen, Regelungseinrichtungen, Sonden, Sicherheitsthermostate, Druckschalter, eine Rauchgas- bzw. Abgasrückführung, eine Kesselabreinigung und ein separater Brennstoffbehälter.

Ein solches Zubehör ist eine Zellenradschleuse. Eine Zellenradschleuse wird bei Biomasse-Heizanlagen bei der Zuführung von Pellets oder Hackgut verwendet.

Gattungsgemäße Zellenradschleusen für diese Anwendung sind bekannt; sie dienen üblicherweise zum dosierten Fördern von biogenen Festbrennstoffen (rieselfähiger, körniger Feststoff bzw. kleinstückiges Schüttgut) in einer Transportleitung zu der Brennkammer.

Unter anderem aufgrund der stückeligen Ausgestaltung der Festbrennstoffe kann der Betrieb der Zellenradschleuse eine Lärmbelastung verursachen, wobei sich die durch die Drehung des Zellenrades entstehenden Geräusche bzw. Schwingungen beispielsweise über die Antriebsachse und das Gehäuse ausbreiten können.

Schwierigkeiten treten auch insbesondere dann auf, wenn man feuchte oder zusammengeballte Brennstoffe in der Schleuse und insbesondere in den Rinnen des Zellenrades anhaftende Feststoffe durchsetzt. Hier können erhebliche Antriebskräfte erforderlich sein, den Vortrieb des Brennstoffs zu gewährleisten. Ebenso kann dies die Geräuschentwicklung beim Antrieb erhöhen.

Beim Betrieb solcher Schleusen kommt es beispielsweise vor, dass ein Teil des einzuschleusenden festen Materials sich zwischen Gehäuse und Zellenrad setzt und ein Drehen des Zellenrades verhindert oder erschwert und es zu ruckartigen Bewegungen des Zellenrades kommt.

Wenn eine derartige Zellenradschleuse im Betrieb blockiert, treten aufgrund der in der Regel hohen gedrehten Massen hohe Trägheitsmomente auf. Beim ruckartigen Blockieren des Zellenrades, zum Beispiel wenn sich Schüttgut zwischen dem Zellenrad und dem Gehäuse verklemmt, kann es daher bei einer unzureichenden Abstützung zu einer Beschädigung des Zellenradantriebes, insbesondere eines Getriebes von diesem, kommen. Ein solches Blockieren kann im Betrieb durchaus mehrmals pro Stunde vorkommen, womit auch die Geräuschentwicklung dessen nicht zu vernachlässigen ist.

Aus der EP 0 885 113 B1, der DE 38 42 811 A1 und der DE 1 056 052 B sind Zellenradschleusen bzw. Zellenwalzen mit einem Gehäuse mit einem Einlauf und einem Auslauf und einem Drehantrieb bekannt. Der Drehantrieb der EP 0 885 113 B1 hat eine Überlastkupplung. Der Drehantrieb der DE 38 42 811 A1 hat eine Rutschkupplung. Der Drehantrieb der DE 1 056 052 B hat eine elastische Kupplung. Der Antrieb für die Zellenwalze der DE 1 056 052 B kann zwischen einer Antriebswelle eines Gleichstrommotors und der Zellenwalze eine Kupplung aufweisen.

Die EP 2 587 150 A2 offenbart als weiteres Zubehör einer Biomasse-Heizanlage eine Raumaustragungsvorrichtung. Hierbei ist die Raumaustragungsvorrichtung als eine Vorrichtung zum Austragen von Schüttgut, insbesondere Biomasseschüttgut, aus einem Lagerraum mit einem lagerraumbodenseitigen, Austragsarme tragenden drehangetriebenen Rotor beschrieben, dessen Austragsarme das Schüttgut einem Förderer zuführen, wobei der Rotor kopfseitig von einer drehbar am Rotor gelagerten Drehscheibe überdeckt ist. Derartige Vorrichtungen dienen zur Austragung von Schüttgut aus Lagerräumen, insbesondere aus Bunker oder Silos, zwecks Zuleitung zu einer Feuerung einer Biomasse-Heizanlage. Der Förderer, dem die drehangetriebenen Austragsarme das Schüttgut zuleiten, ist üblicherweise eine, in einem nach oben offenen Gehäuse angeordnete, Förderschnecke, die das Schüttgut bei der Feuerung dosiert zuführt. Die mit dem Rotor rotierenden Austragsarme haben die Aufgabe, das über die Lagerraumgrundfläche verteilte Schüttgut der nach oben offenen Förderschnecke zuzuleiten. Der die Austragsarme tragende drehangetriebene Rotor wird typischerweise von einem Winkelgetriebe an der Förderschnecke angetrieben. Um das Rotordrehmoment und die benötigte Antriebsleistung dabei gering zu halten, sind die Austragsarme entweder flexibel, nach Art von Blattfedern, oder aber knickbar ausgeführt. Die Austragsarme können sich bei ausreichend befülltem Lagerraum zum Rotor hin einziehen bzw. bei sich drehendem Rotor um den Rotor wickeln, wobei sie gegebenenfalls zumindest teilweise unter der Drehscheibe verschwinden.

Die EP 2 966 349 A1 offenbart ebenso eine gattungsgemäße Raumaustragungsvorrichtung. Eine derartige Austragungsvorrichtung ist zudem beispielsweise aus der DE 34 10 546 A bekannt. Dort dient als Förderer zwischen Schüttgutspeicher und Brenneinrichtung bzw. Vergasungseinrichtung eine Förderschnecke. Diese Förderschnecke ist wendelförmig. In den Hohlräumen der Wendel wird das Schüttgut gestaucht und komprimiert. Die in der Förderschnecke vom Schüttgut ausgeübten Kräfte und Spannungen steigen mit wachsendem Abstand zum Schüttgutspeicher proportional an. Dies impliziert langfristig eine erhebliche Belastung des Antriebsstrangs und insbesondere der Lager der Förderschnecke. In Folge der Kompression des Schüttguts kann der Brennstoff bzw. das Schüttgut in unerwünschter Weise zudem verdichtet werden. Auch kann der Brennstoff eine Gefügestruktur in unerwünschter Weise verändern. Eine weitere Raumaustragungsvorrichtung mit einer Förderschnecke zwischen Schüttgutspeicher und Brenneinrichtung zeigt auch die DE 32 00 727.

Dabei kann der Betrieb einer Raumaustragungsvorrichtung ebenso wie der Betrieb einer Zellenradschleuse eine erhebliche und unerwünschte Geräuschbelastung verursachen. Dies liegt an der Art des Antriebs, sowie des Brennstoffs, der mit einer Förderschnecke in einem Kanal transportiert wird, d.h. an der Anwendung. Allerdings besteht insbesondere bei Biomasse-Heizanlagen für Wohngebäude die Anforderung, deren Geräuschemission gering zu halten.

Dabei stellt auch der Antrieb, beispielsweise ein Elektromotor, eine Geräusch- bzw. Schallquelle dar, insbesondere wenn der Antrieb stockt.

Bei Förderschnecken und auch Schneckenpressen und dergleichen ist es zudem bereits bekannt, die Schnecke mit ihrer Antriebseinrichtung so zu verbinden, dass die ganzen Schnecke oder ein Teil derselben von der Treibvorrichtung aus während der Drehung eine hin- und hergehende (schüttelnde oder vibrierende) Bewegung in axialer Richtung oder eine wechselnde Drehgeschwindigkeit oder beides erfährt. Dabei handelt es sich hier nur um die Verminderung der Reibung zwischen Schnecke und der von ihr vorgeschobenen Masse, womit die Drehbewegung der Masse möglichst gering gehalten werden soll. Auch diese Art des gesteuerten Antriebs verursacht nachteilhaft eine erhöhte Geräuschbelastung.

Um für einfache Konstruktionsverhältnisse beim Antrieb des Rotors einer Zellenradschleuse zur Beschickung einer Feuerung insbesondere von Heizkesseln zu sorgen, ist es weiterhin aus der AT 13 782 U1 bekannt, das Getriebe des Getriebemotors über eine Steckkupplung auf der Rotorwelle der Zellenradschleuse zu lagern und über eine Drehmomentstütze gegenüber dem Schleusengehäuse abzustützen. Diese Drehmomentstütze kann aus einem am Getriebegehäuse anschraubbaren, zur Rotorwelle parallelen Rahmen bestehen, der mit einem Schenkel das Schleusengehäuse auf einer Umfangsseite umgreift und in dieser Anschlaglage durch einen zur Rotorwelle radialen Rastansatz des Schleusengehäuses gesichert wird. Der mit einer entsprechenden Rastaussparung versehene Rahmen der Drehmomentstütze muss somit zunächst radial zum Schleusengehäuse auf den Rastansatz aufgesteckt werden, bevor der Rahmen am Getriebegehäuse festgeschraubt werden kann.

Mit der Befestigung der Drehmomentstütze am Getriebegehäuse wird der Getriebemotor nicht nur gegenüber einer Drehung um die Rotorwelle abgestützt, sondern auch gegenüber einem axialen Abziehen von der Rotorwelle gesichert, weil der in die Rastaussprung des Rahmenschenkels formschlüssig eingreifende Rastansatz des Schleusengehäuses einen axialen Anschlag für die Drehmomentstütze und damit für den Getriebemotor bildet. Da die Drehmomentstütze auf der bezüglich der Rotorwelle dem Motorteil des Getriebemotors gegenüberliegenden Seite des Getriebegehäuses angeordnet ist, kann der Motorteil unabhängig von der Drehmomentstütze auf der dem Schleusengehäuse zugewandten Seite des Getriebegehäuses vorgesehen werden, um trotz einer platzsparenden Bauweise den Zugang insbesondere zu den ein- und auslaufseitig an die Zellenradschleuse angeschlossenen Förderschnecken von der dem Motorteil des Getriebemotors gegenüberliegenden Seite her zu erleichtern. Je nach den Einbauverhältnissen bedeutet dies aber, dass der Motorteil wahlweise auf einer der beiden Seiten des Schleusengehäuses angeordnet werden soll, was unterschiedliche Drehmomentstützen erfordert. Außerdem wird die Rotorwelle zufolge der Lagerung des Getriebemotors auch auf Biegung beansprucht.

Die Drehmomentstütze der AT 13 782 U1 ist dabei mittels zweier Drehanschläge zur Lastabtragung am Schleusengehäuse vorgesehen und ist insofern als 2-Punkt Auflager ausgeführt. Ein solches kann unter Umständen Stabilitätsprobleme aufweisen und erfordert viel Material bei der Herstellung. Zudem hat sich gezeigt, dass bei dieser Anordnung zusätzliche Geräusche bei Verwindung des Motors an der Drehmomentstütze entstehen.

Weiter können herkömmliche Drehmomentstützen das Problem aufweisen, dass diese komplex in der Herstellung sind, und viel Material benötigen, um die erforderliche Festigkeit aufzuweisen.

Zudem kann das Problem bestehen, dass herkömmliche Drehmomentstützen sehr stabil und fest konstruiert sein müssen, was jedoch die Weiterleitung von Schallwellen bzw. Geräuschen begünstigt.

Vorstehendes gilt auch für die Mechanik einer Drehmomentstütze einer Raumaustragungsvorrichtung oder einer Stockerschnecke.

Es ist im Angesicht der vorstehend aufgeführten Probleme eine Aufgabe der vorliegenden Erfindung, eine Drehmomentstütze für eine Transporteinrichtung für Brennstoffe einer Biomasse-Heizanlage vorzusehen, welche eine stabile Befestigung vorsieht.

Eine weitere Aufgabe kann darin bestehen, dass die Geräuschemission verringert wird.

Eine weitere Aufgabe kann darin bestehen, dass die Drehmomentstütze einfach und kostengünstig herzustellen ist.

Weitere Aufgaben können darin bestehen, eine Drehmomentstütze für eine Transporteinrichtung für Brennstoffe einer Biomasse-Heizanlage vorzusehen, welche Material spart und/oder einfach herzustellen ist und/oder als Standardbauteil bei unterschiedlichen Vorrichtungen zum Einsatz kommen kann.

Diese vorstehend genannte(n) Aufgabe(n) wird/werden durch die Gegenstände der unabhängigen Ansprüche gelöst. Weitere Aspekte und vorteilhafte Weiterbildungen sind Gegenstand der abhängigen Ansprüche.

Gemäß einem Aspekt der vorliegenden Offenbarung ist eine Drehmomentstütze für eine Transporteinrichtung für Brennstoffe einer Biomasse-Heizanlage, aufweisend: eine Basisplatte mit drei Schenkeln und drei Seiten; wobei die Basisplatte eine Achsöffnung zur Durchführung einer angetriebenen Achse aufweist; wobei die Basisplatte eine Mehrzahl von Befestigungslöchern zur Befestigung eines Antriebs aufweist; wobei jeder der Schenkel ein Aufnahmeloch zur Aufnahme eines Befestigungselements zur abtriebseitigen Befestigung an einer Tragstruktur aufweist.

Gemäß einer Weiterbildung des vorstehenden Aspekts ist eine Drehmomentstütze vorgesehen, wobei die Basisplatte annähernd dreiecksförmig ausgebildet ist; wobei die Ecken der dreiecksförmigen Basisplatte durch die Enden der Schenkel gebildet werden.

Gemäß einer Weiterbildung des vorstehenden Aspekts ist eine Drehmomentstütze vorgesehen, wobei die Zentren der Aufnahmelöcher (die Ecken eines gleichseitigen oder gleichschenkligen Dreiecks bilden.

Gemäß einer Weiterbildung des vorstehenden Aspekts ist eine Drehmomentstütze vorgesehen, wobei in einem Aufnahmeloch eine Dämmbuchse zur Schalldämpfung vorgesehen ist.

Gemäß einer Weiterbildung des vorstehenden Aspekts ist eine Drehmomentstütze vorgesehen, wobei in jedem Aufnahmeloch jeweils eine Dämmbuchse zur Schalldämpfung vorgesehen ist.

Gemäß einer Weiterbildung des vorstehenden Aspekts ist eine Drehmomentstütze vorgesehen, wobei die Basisplatte in der Draufsicht annähernd die Form eines gleichschenkligen oder gleichseitigen Dreiecks aufweist.

Gemäß einer Weiterbildung des vorstehenden Aspekts ist eine Drehmomentstütze vorgesehen, wobei die Basisplatte mit Ausnahme der Mehrzahl von Befestigungslöchern drei Symmetrieachsen aufweist, die die Seitenhalbierenden der Seiten darstellen, wobei die drei Symmetrieachsen die Mitte (M) der Drehmomentstütze schneiden.

Gemäß einer Weiterbildung des vorstehenden Aspekts ist eine Drehmomentstütze vorgesehen, wobei das Zentrum der Achsöffnung in der Mitte der Drehmomentstütze vorgesehen ist.

Gemäß einer Weiterbildung des vorstehenden Aspekts ist eine Drehmomentstütze vorgesehen, wobei die Mehrzahl von Befestigungslöchern den gleichen Abstand zu der Mitte der Drehmomentstütze aufweist.

Gemäß einer Weiterbildung des vorstehenden Aspekts ist eine Drehmomentstütze vorgesehen, wobei die Seiten tailliert vorgesehen sind.

Gemäß einer Weiterbildung des vorstehenden Aspekts ist eine Drehmomentstütze vorgesehen, wobei jeder der Schenkel eine Kröpfung aufweist, wobei sich die Ebene der Basisplatte mit den Aufnahmelöchern von der Ebene der Basisplatte mit den Befestigungslöchern zur Befestigung eines Antriebs unterscheidet.

Gemäß einer Weiterbildung des vorstehenden Aspekts ist eine Drehmomentstütze vorgesehen, wobei die Dämmbuchsen aus Kunststoff oder Gummi bestehen.

Gemäß einer Weiterbildung des vorstehenden Aspekts ist eine Zellenradschleuse mit einer hierin beschriebenen Drehmomentstütze vorgesehen.

Gemäß einer Weiterbildung des vorstehenden Aspekts ist eine Raumaustragungsvorrichtung mit einer hierin beschriebenen Drehmomentstütze vorgesehen

Die erfindungsgemäße Drehmomentstütze ist nachfolgend in Ausführungsbeispielen und einzelnen Aspekten anhand der Figuren der Zeichnung näher erläutert:
- Fig. 1: zeigt eine dreidimensionale Schrägansicht einer Drehmomentstütze;
- Fig. 2: zeigt eine Draufsicht auf die Drehmomentstütze der Fig. 1;
- Fig. 3: zeigt eine Querschnittsansicht der Drehmomentstütze der Fig. 1 und der Fig. 2;
- Fig. 4: zeigt eine Explosionszeichnung einer Zellenradschleuse mit einer Drehmomentstütze der Figuren 1 bis 3;
- Fig. 5: zeigt eine Explosionszeichnung einer Raumaustragungsvorrichtung mit einer Drehmomentstütze der Figuren 1 bis 3.

### BESCHREIBUNG EINER BEISPIELHAFTEN AUSFÜHRUNGSFORM

Im Folgenden werden eine Ausführungsform der vorliegenden Offenbarung und zwei Anwendungen derer unter Bezugnahme auf die beigefügten Zeichnungen lediglich beispielhaft offenbart. Die Ausführungsform und die darin verwendeten Begriffe sollen jedoch nicht dazu dienen, die vorliegende Offenbarung auf diese bestimmte Ausführungsform zu beschränken, und es sollte so ausgelegt werden, dass die Ausführungsform verschiedene Änderungen, Äquivalente und/oder Alternativen gemäß den Ausführungsformen der vorliegenden Offenbarung beinhaltet.

Sollten in der Beschreibung allgemeinere Begriffe für die in den Figuren dargestellten Merkmale oder Elemente verwendet werden, so ist beabsichtigt, dass für den Fachmann nicht nur das spezielle Merkmal oder Element in den Figuren offenbart ist, sondern auch die allgemeinere technische Lehre.

In Bezug auf die Beschreibung der Figuren können die gleichen Bezugszeichen in den einzelnen Figuren verwendet werden, um auf ähnliche oder technisch entsprechende Elemente zu verweisen. Weiter können der Übersichtlichkeit halber in einzelnen Detail- oder Ausschnittsansichten mehr Elemente oder Merkmale mit Bezugszeichen dargestellt sein als in den Überblicksansichten. Dabei ist davon auszugehen, dass diese Elemente oder Merkmale auch entsprechend in den anderen Figuren offenbart sind, auch wenn diese dort nicht explizit aufgeführt sind.

Es ist zu verstehen, dass eine Singularform eines Substantivs, das einem Gegenstand entspricht, eines oder mehrere der Dinge beinhalten kann, es sei denn, der betreffende Kontext weist eindeutig auf etwas anderes hin.

Ein in der vorliegenden Offenbarung verwendeter Ausdruck "konfiguriert zu" (oder "eingerichtet") kann beispielsweise durch "geeignet für", "geeignet zu", "angepasst zu", "gemacht zu", "fähig zu" oder "entworfen zu" ersetzt werden, je nach dem technisch Möglichen. Alternativ kann in einer bestimmten Situation ein Ausdruck "Vorrichtung konfiguriert zu" oder "eingerichtet zu" bedeuten, dass die Vorrichtung zusammen mit einer anderen Vorrichtung oder Komponente arbeiten kann, oder eine entsprechende Funktion ausführen kann.

### (3-Punkt Drehmomentstütze)

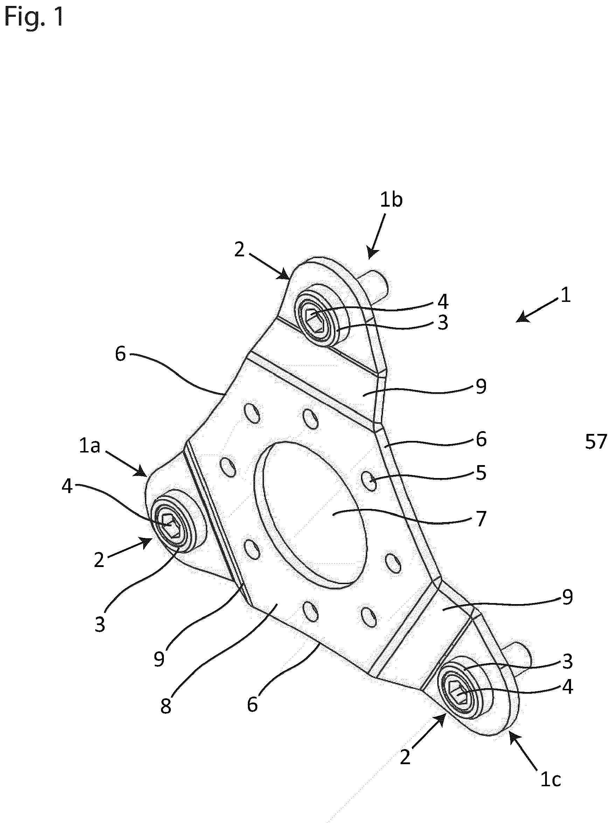

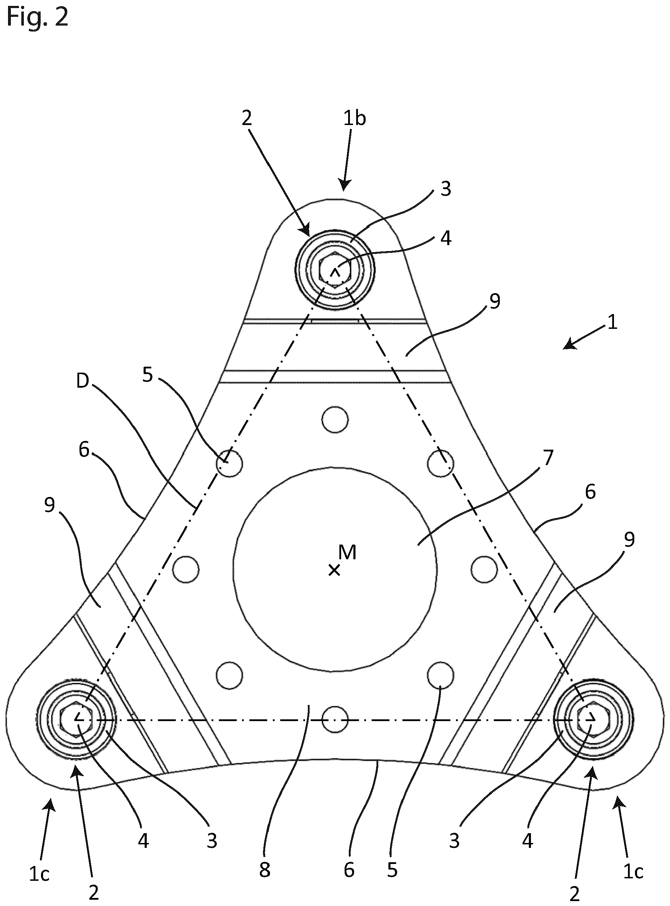

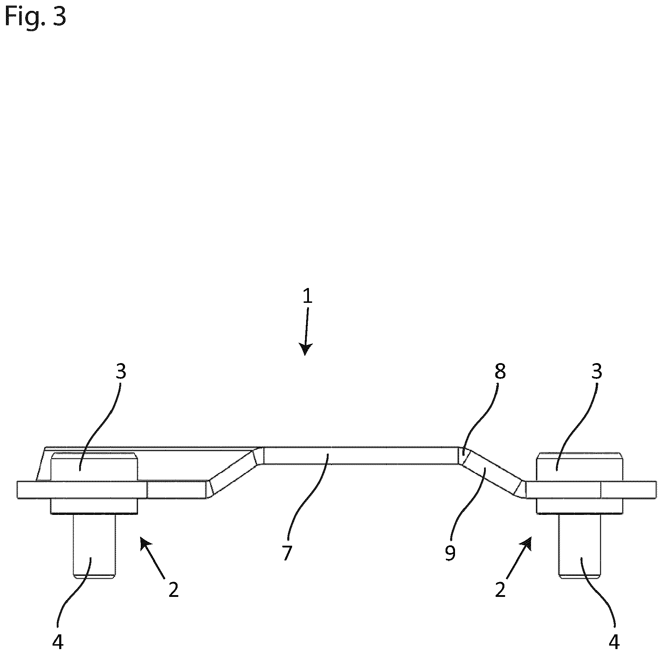

Fig. 1 zeigt eine dreidimensionale Schrägansicht eines Beispiels einer erfindungsgemäßen Drehmomentstütze 1. Fig. 2 zeigt eine Draufsicht auf die Drehmomentstütze 1 der Fig. 1. Fig. 3 zeigt eine Querschnittsansicht der Drehmomentstütze 1 der Fig. 1 und der Fig. 2. Gleiche Bezugszeichen bezeichnen entsprechend gleiche Teile/Merkmale in den Figuren 1 bis 3.

Bezugnehmend auf die Figuren 1 bis 3 weist die Drehmomentstütze 1 eine Basisplatte 8 mit einer Achsöffnung 7 auf. Die Basisplatte 8 weist wiederum drei Schenkel 1a, 1b, 1c auf, welche um die Achsöffnung 7 angeordnet sind. Die Enden der drei Schenkel 1a, 1b, 1c zeigen jeweils von der Mitte M der Drehmomentstütze 1 nach außen. Diese Enden sind somit auch die distalen Enden der Basisplatte 8. Diese Enden können abgerundet vorgesehen sein. Diese Eigenschaft ändert allerdings nichts daran, dass man die Basisplatte 8 in der Draufsicht als dreiecksförmig bezeichnen kann, selbst wenn diese keine harten Ecken oder eine Taillierung (siehe später) aufweist. Weiter weist die Basisplatte die drei Seiten 6 der Basisplatte 8 auf.

Die Basisplatte 8 kann aus einem Metall bestehen, vorzugsweise einem verwindungssteifen Hartmetall. Dabei kann die Basisplatte 8 zur Herstellung beispielsweise im Laserschneidverfahren geschnitten und metallgeformt werden. Alternativ kann die Basisplatte 8 aber auch aus einem Kunststoff bestehen.

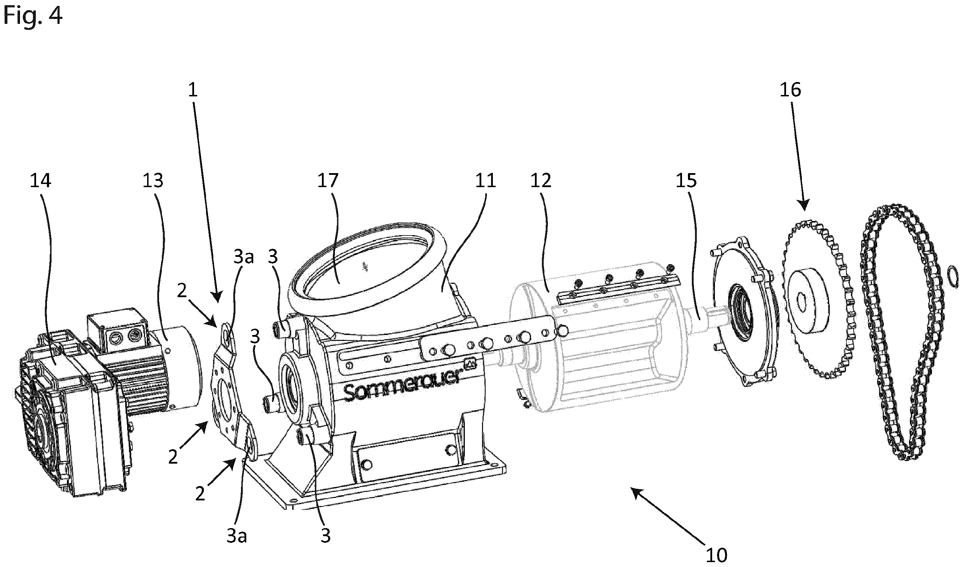

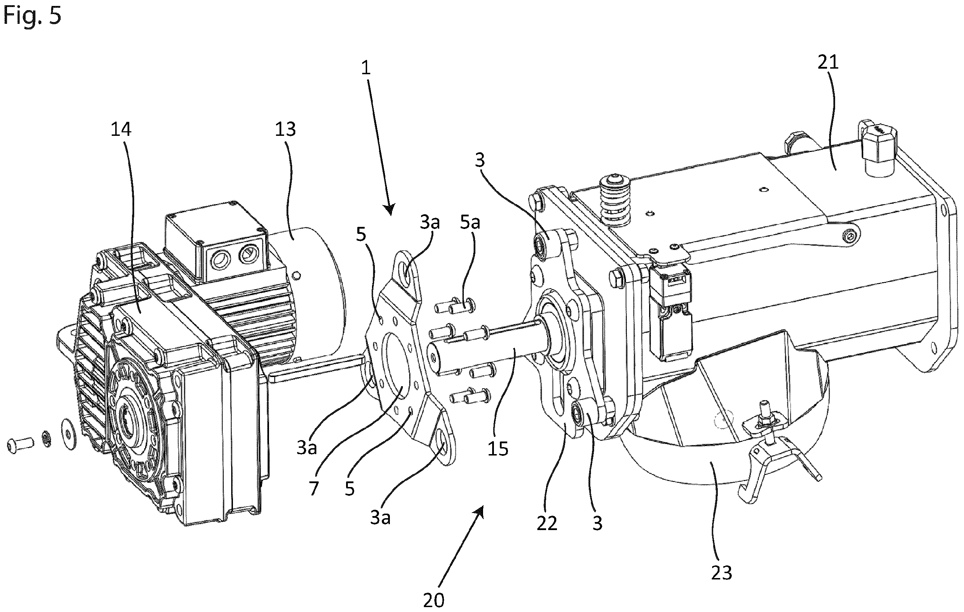

Die Achsöffnung 7 dient der Durchführung einer Antriebsachse 15 (vgl. Fig. 4 und Fig. 5) oder Antriebswelle eines Zubehörs einer Biomasse-Heizanlage, beispielsweise der Antriebswelle einer Förderschnecke für biogenen Brennstoff oder der Antriebswelle einer Zellenradschleuse durch die Drehmomentstütze 1. Optional kann die Achsöffnung 7 für eine drehbare Lagerung der Antriebsachse vorgesehen sein.

Die Basisplatte 8 weist Löcher 5 oder Bohrungen 5 zur starren Verbindung mit einem Antrieb 13 (in Fig. 4 und Fig. 5 dargestellt) auf. Die Löcher 5 können auf einer Kreislinie um die Achsöffnung 7 in regelmäßigen Abständen angeordnet sein. Alternativ können die Löcher 5 allerdings je nach den Anforderungen des zu befestigenden Antriebs (und beispielsweise nach der Lage von dessen Befestigungslöchern oder Schraubenlöchern) auch anders angeordnet werden.

Die Basisplatte 8 kann nun in der Draufsicht der Fig. 2 als grob dreiecksförmig oder als Dreiecksplatte 8 bezeichnet werden. Dabei weist die Basisplatte 8 (mit Ausnahme der Löcher 5) drei Symmetrieachsen auf, die sowohl die Mittelsenkrechten als auch die Seitenhalbierenden sind. Diese drei Symmetrieachsen betreffend der Außenkontur der Basisplatte 8 erstrecken sich durch die Mitte M und jeweils durch die Mitte des jeweiligen Schenkels 1a, 1b, 1c.

Die drei Schenkel 1a, 1b, 1c erstrecken sich in distaler Richtung und verjüngen sich mit der Entfernung zur Mitte M der Drehmomentstütze 1.

Weiter weist die Basisplatte 8 die drei Seiten 6 auf, die zur Materialersparnis (optional) als seitliche Taillierungen 6 ausgebildet sind. Die drei Taillierungen 6 sind damit an den Außenseiten 6 der Basisplatte 8 der Drehmomentstütze 1 vorgesehen.

Die Achsöffnung 7 kann im Zentrum M der Drehmomentstütze vorgesehen sein. Dabei ist die Achsöffnung 7 ein (vorzugsweise kreisrundes) Loch, dessen Mitte M die Mitte oder der geometrische Schwerpunkt der Drehmomentstütze 1 sein kann.

Weiter weist die Drehmomentstütze 1 drei Befestigungspunkte 2 zur Verbindung mit einer Tragstruktur einer Vorrichtung, beispielsweise mit einem Gehäuse einer Transporteinrichtung für Brennstoffe einer Biomasse-Heizanlage auf. Diese drei Befestigungspunkte 2 sind jeweils an den distalen Enden der Schenkel 1a, 1b, 1c vorgesehen. Damit ist eine 3-Punkt Drehmomentstütze 1 vorgesehen.

Die drei Befestigungspunkte 2 der drei Schenkel 1a, 1b, 1c (und damit die Schenkel 1a, 1b, 1c) weisen im Einzelnen jeweils ein Aufnahmeloch 3a (in den Fig. 4 und 5 ersichtlich) für eine Dämmbuchse 3 auf.

Die Dämmbuchse 3 kann aus einem Kunststoff (beispielsweise POM, PPs, PVC, PP, PE, PPs-el, PE-el, PVDF oder Gummi) bestehen, welcher bevorzugt schallabsorbierende Eigenschaften aufweisen kann. Die drei Dämmbuchsen 3 sind jeweils buchsenförmig ausgebildet und weisen in deren Mitte eine Öffnung zur (vorzugsweise formschlüssigen) Aufnahme eines Befestigungselements 4, beispielsweise einer Schraube 4 (vgl. Fig. 4 und Fig. 5) auf.

Die jeweilige Mitte der drei Aufnahmelöcher 3a bilden die drei Ecken eines Dreiecks D (vgl. die Strich-Punkt-Linie der Fig. 2), das bevorzugt gleichseitig ausgebildet ist. Der Schwerpunkt dieses Dreiecks D kann wiederum die Mitte M der Drehmomentstütze 1 sein.

Weiter sind die drei Schenkel 1a, 1b, 1c jeweils mittels eines (vorzugsweise doppelt) gebogenen oder winklig angeordneten Plattenabschnitts 9 gekröpft ausgeführt. So ist eine Kröpfung 9 vorgesehen, welche eine mittige Auflage der Dämmbuchsen 3 auf den Schenkeln 1a, 1b, 1c der Basisplatte 8 ermöglicht (siehe insbesondere die linke Seite der Fig. 3 zur Form der Kröpfung 9). In anderen Worten ist die Basisplatte 8 mit deren Schenkeln 1a, 1b, 1c, im Querschnitt (vgl. Fig. 3) brückenförmig ausgebildet, wobei die Schenkel 1a, 1b, 1c abtriebseitig bzw. auf der Seite des Abtriebs aufliegen. Damit wird zudem sichergestellt, dass alleine die Dämmbuchsen 3 abtriebseitig aufliegen, unter anderem um die Schallweiterleitung durch die Drehmomentstütze 1 zu verringern.

Die Aufnahmelöcher 3 der Basisplatte 8 liegen nicht in der gleichen (Querschnitts-) Ebene wie die Achsöffnung 7, was die Schalldämpfung und auch die Montage nochmals verbessert.

Auch aus Fig. 3 ist ersichtlich, dass die Drehmomentstütze 1 mit deren Aufnahmelöchern 3 derart eingerichtet sein kann, dass die Aufnahmelöcher 3 über die Dämmbuchsen 3 geschoben werden können.

Beispielsweise können die Dämmbuchsen 3 schon vorab an dem Abtriebseitigen Gehäuse 11 montiert sein, wobei dann Aufnahmelöcher 3 auf die Dämmbuchsen 3 aufgeschoben werden, und wobei danach die Fixierung mittels der weiteren Befestigungselemente, beispielsweise Bolzen oder Schrauben, erfolgen kann (vgl. auch Fig. 5, wobei die Dämmbuchsen 3 Abtriebseitig vormontiert sind, und dann die Drehmomentstütze 1 mit deren Aufnahmelöchern 3 auf die Dämmbuchsen 3 aufgeschoben wird).

Die drei Dämmbuchsen 3 können alternativ oder zudem einen Anschlag aufweisen, so dass diese in das Aufnahmeloch 3a eingesteckt werden können, bis der Anschlag der Dämmbuchse 3 auf der Basisplatte aufliegt. Dann kann in Folge die Drehmomentstütze 1 mit den Dämmbuchsen mit dem Abtriebseitigen Gehäuse verschraubt werden.

### (Zellenradschleuse mit Drehmomentstütze)

Fig. 4 zeigt eine Explosionszeichnung einer Zellenradschleuse mit einer Drehmomentstütze 1 der Figuren 1 bis 3.

Die Drehmomentstütze 1 ist zwischen dem Antrieb 13 und einem Gehäuse 11 einer Zellenradschleuse 10 vorgesehen.

Antriebsseitig ist der Antrieb 13, beispielsweise ein Elektromotor, mit einem Getriebe 14 mit einer Aufnahme für eine Antriebsachse 15 oder Antriebswelle 15 der Zellenradschleuse 10 vorgesehen.

Abtriebseitig sind das Gehäuse 11, ein Zellenrad 12 mit zwei Kammern, eine Mechanik 16 für einen (nicht dargestellten) Schneckenantrieb und eine Brennstoffzufuhröffnung 17 vorgesehen.

Die Drehmomentstütze 1 dient der stabilen Fixierung des Antriebs 13 und des Getriebes 14, welche gemeinsam einen Getriebemotor vorsehen.

Die Achse 15 ist im zusammengebauten Zustand durch die Drehmomentstütze 1 durchgeführt vorgesehen.

Das Getriebe 14 ist mittels Befestigungselementen 5a, beispielswese Schrauben 5a, mit der Drehmomentstütze 1 verbunden bzw. verschraubt.

Am Gehäuse 11 ist ein Gegenstück zur Drehmomentstütze 1 vorgesehen, an welchem die Dämmbuchsen 3 angebracht sind. Die Drehmomentstütze 1 kann mit deren Aufnahmelöchern 3a auf die Dämmbuchsen 3 aufgeschoben werden, und dann kann die Drehmomentstütze 1 mit dem Gehäuse 11 verschraubt werden.

Im Ergebnis bzw. im zusammengebauten Zustand ist die Drehmomentstütze 1 mittels dreier Befestigungspunkte 2 an dem Gehäuse 11 angebracht, wobei die drei Befestigungspunkte 2 den gleichen Abstand zur Mitte M der Achsöffnung 7 aufweisen und dreiecks-symmetrisch angeordnet sind.

Zudem befinden sich die Dämmbuchsen 3 im (Festkörper-) Schallübertragungsweg zwischen Gehäuse 11 und Motor 13.

### (Raumaustragungsvorrichtung mit Drehmomentstütze)

Fig. 5 zeigt eine Explosionszeichnung einer Raumaustragungsvorrichtung 20 mit einer Drehmomentstütze 1 der Figuren 1 bis 3. Damit ist klargestellt, dass die vorliegende Drehmomentstütze für verschiedene Arten von Transporteinrichtungen für Biomasse-Heizeinrichtungen verwendet werden kann. Gleiche Bezugszeichen wie bei der Fig. 4 bezeichnen gleiche oder ähnliche Teile/Merkmale.

Die Raumaustragungsvorrichtung 20 weist einen Förderkanal 21 für einen Brennstoff auf, in welchem (nicht dargestellt) eine Förderschnecke zur Förderung des Brennstoffs vorgesehen ist, wobei die Förderschnecke über die Achse 15 angetrieben wird. Der Brennstoff wird in Fig. 5 beispielsweise von der rechten Seite durch den Förderkanal 21 nach links und dann durch den Auslass 23 nach unten befördert. Der Förderkanal 21 ist Teil einer Tragstruktur der Raumaustragungsvorrichtung 20.

Auch in Fig. 5 verbindet die Drehmomentstütze 1 die Antriebsseite mit der Abtriebsseite. Abtriebseitig ist ein Gegenstück, vorliegend eine Aufhängung 22 mit einem Lager für die Achse 15, zur Drehmomentstütze 1 vorgesehen, an welchem die Dämmbuchsen 3 angebracht sind. Im Übrigen sind rechts zu den Dämmbuchsen Gegenmuttern für die Verschraubung dargestellt.

Auch hier kann die Drehmomentstütze 1 auf die Dämmbuchsen 3 aufgeschoben werden. Es befinden sich die Dämmbuchsen 3 somit vorteilhaft im (Festkörper-) Schallübertragungsweg zwischen Brennstoffförderkanal 21 und Motor 13.

Im Ergebnis bzw. im zusammengebauten Zustand ist die Drehmomentstütze 1 mittels dreier Befestigungspunkte 2 an dem Förderkanal 11 angebracht, wobei die drei Befestigungspunkte 2 den gleichen Abstand zur Mitte M der Achsöffnung 7 aufweisen, und dreiecks-symmetrisch angeordnet sind.

### (Vorteile)

Der Zweck der Drehmomentstütze 1 ist zunächst das Auffangen des Differenzdrehmomentes von An- und Abtrieb und dessen Einleitung in die Tragstruktur (zum Beispiel Gehäuse oder Rahmen). Dabei soll vorliegend nicht nur das Drehmoment in der Achse der Antriebswelle aufgefangen werden, sondern auch seitlich wirkende Momente (oder auch Biegemomente), welche sich insbesondere bei der Beförderung von Stückgut mittels einer Schnecke oder Schleuse ergeben können. Hierbei können sich beispielsweise Pellets seitlich im Förderkanal 21 verkeilen, womit über die Achse 15 Quer- und Biegekräfte auf die Drehmomentstütze entstehen können, die durch die Hebelwirkung der Achse 15 (je nach den weiteren Achslagern) zudem nochmals verstärkt werden können. Es können also Verwindungen in unterschiedlichen Richtungen vorkommen.

Durch die Aufhängung der Drehmomentstütze 1 an drei Punkten 2 ist allerdings mechanisch gewährleistet, dass eine große Stabilität der Drehmomentstütze 1 auch gegenüber solchen Verwindungen vorliegt. Durch die drei Befestigungspunkte 2 ist gewährleistet, dass Kräfte in allen relevanten Richtungen durch die Drehmomentstütze 1 aufgefangen werden können.

Bei der herkömmlichen Drehmomentstütze der AT 13 782 U1 mit nur zwei Befestigungspunkten können seitliche Kräfte, die quer zur Verbindungslinie der Befestigungspunkte liegen, beispielsweise als Ergebnis von Tests nur unzureichend aufgenommen werden. Somit ist die vorliegende Drehmomentstütze 1 eine an drei Befestigungspunkten 2 fixierte bzw. aufliegende Stütze, wobei übliche Drehmomentstützen für Zubehör oder Transporteinrichtungen bei Biomasse-Heizanlagen im Gegensatz dazu 2- oder 1-Punkt Auflager (d.h. mit zwei oder einem Befestigungspunkt) sind.

Würden nun allerdings vier oder mehr Befestigungspunkte zur nochmaligen Steigerung der Stabilität vorgesehen, so verschlechtert sich die Dämpfung der Geräusche bzw. des Schalls durch die Drehmomentstütze, da mehr Befestigungspunkte mehr Kontaktfläche, mehr Material zur Schallleitung und damit einen geringeren Schallwiderstand zwischen Antriebsseite und Abtriebsseite bedeuten.

Insofern hat sich vorliegend herausgestellt, dass drei Befestigungspunkte der ideale Kompromiss zwischen mechanischer Stabilität (auch in Querrichtungen zur Achse 15 oder bei Biegebeanspruchung) und den Schalldämpfungseigenschaften der Drehmomentstütze 1 sind.

Zudem trägt die Lage der Befestigungspunkte 2 bzw. der Mitten der Aufnahmelöcher 3 auf den Ecken eines gleichseitigen Dreiecks zur Erhöhung der mechanischen Stabilität bei, so wie das dem Fachmann aus mechanischen/physikalischen Überlegungen bei Betrachtung der vorliegend offenbarten Dreiecksgeometrie ersichtlich wird. Auch trägt die Lage der Befestigungspunkte 2 zu einer einfachen Montage am Gegenstück bei, da die Punkte 2 zwingend in einer Ebene liegen müssen, und beispielsweise Herstellungstoleranzen einfacher kompensiert oder gehandhabt werden können als beispielsweise bei einer Drehmomentstütze mit vier mehr Befestigungspunkten.

Weiter ist auch die Basisplatte in der in etwa dreiecksförmigen Formgebung bzw. der symmetrischen Formgebung als gleichseitiges Dreieck stabiler und in der Montage einfach zu handhaben.

Weiter soll (vorzugsweise) die Geräuschentwicklung bzw. Geräuschemission einer Transporteinrichtung einer Biomasse-Heizanlage nochmals verringert werden. Hierzu dienen die drei Dämmbuchsen 3, welche eine Barriere im Schallleitungsweg zwischen Antrieb 13 und Abtriebsseite darstellt.

Hier gibt es eine Synergie zwischen den drei Befestigungspunkten 2 und den drei Dämmbuchsen 3: Würden mehr als drei Dämmbuchsen 3 vorgesehen sein, würde deren gemeinsamer Schallwiderstand sinken, was die Dämpfungswirkung der Drehmomentstütze 1 verschlechtern würde.

Weiter ist auch mittels der Kröpfung 9 eine Beabstandung der Löcher 5 für den Antrieb zu den Aufnahmelöchern 3a in Dickenrichtung vorgesehen. Auch dies verbessert die Dämpfungswirkung der Drehmomentstütze 1 aufgrund der winkligen Ausgestaltung der sich ergebenden Schalleitungspfade in der Basisplatte 8 und beispielsweise der sich daraus ergebenden Interferenzen zwischen den Schalleitungsfaden.

Die Kröpfung 9 dient zudem einer einfachen Montage der Drehmomentstütze.

Vorliegend wurde somit erkannt, dass die Drehmomentstütze 1 eine wichtige Rolle bei der Übertragung des Schalls bzw. der Geräusche in der Vorrichtung spielt.

Insofern dient die vorstehend erläuterte Ausbildung der Drehmomentstütze 1 mit den Dämmbuchsen 3 der Verringerung oder gar Unterbrechung der Schall- bzw. Geräuschübertragung insbesondere von dem Antrieb 13 auf das Gehäuse 11, während gleichzeitig eine annähernd optimale mechanische Stabilität insbesondere für die obenstehenden Anwendungen (vgl. Fig. 4 und Fig. 5) geschaffen wird.

Zudem wurde vorliegend erkannt, dass die störenden Geräuschemissionen auch aus der Drehmomentstütze selbst und der Befestigung einer herkömmlichen Drehmomentstütze selbst hervorgehen können.

Dabei kann durch eine Verwindung einer (beispielsweise als Doppelwinkel vorgesehenen) Basisplatte des Stands der Technik bei Beanspruchung ein Geräusch erzeugt werden, wobei ein Metall-auf-Metall Geräusch zwischen den Befestigungselementen (Metallbolzen oder Schrauben) und der Basisplatte einer Drehmomentstütze erzeugt wird, da diese bei Beanspruchung aufeinander arbeiten.

Der Einsatz der erfindungsgemäßen Dämmbuchse 3 verhindert dieses Reiben von Metall auf Metall, womit ein störendes Metall-auf-Metall Geräusch vermieden werden kann.

Zudem ist die vorliegende Drehmomentstütze recht einfach herzustellen, und erfordert vergleichsweise wenig Material. Damit ist diese kostensparend.

Die Dämmbuchsen 3 können beispielsweise im Kunststoffspritzgussverfahren oder im Kunststofftiefziehverfahren günstig in großen Stückzahlen hergestellt werden.

Zusammengefasst ist eine 3-Punkt Drehmomentstütze (Dreipunktlagerung) mit optionalen integrierten Geräusch-Absorbierungsaufsätzen (den Dämmbuchsen 3) offenbart. Die vorliegenden Drehmomentstütze ist aufgrund ihrer Geometrie besonders stabil bei gleichzeitig einfacher Konstruktion. Eine Geräuschentwicklung durch die Drehmomentstütze selbst bzw. deren Kontaktpunkte zu anderen Metallteilen wird vorteilhaft vermieden.

### (Weitere Ausführungsformen)

Die Erfindung lässt neben den erläuterten Ausführungsformen und Aspekten weitere Gestaltungsgrundsätze zu. So können einzelne Merkmale der verschiedenen Ausführungsformen und Aspekte auch beliebig miteinander kombiniert werden, solange dies für den Fachmann als ausführbar ersichtlich ist.

Obschon die Drehmomentstütze 1 mit Ihren Schenkeln annähernd (bis auf die Befestigungslöcher 5, welche in jedem Falle je nach zu befestigendem Antrieb angeordnet sind) symmetrisch dargestellt ist, kann die Drehmomentstütze 7 auch asymmetrisch vorgesehen sein, solange diese drei Befestigungspunkte 2 aufweist.

Obschon die Drehmomentstütze 1 mit ihrer Basisplatte 8 in der Draufsicht in der Form eines gleichseitigen Dreiecks (und der entsprechenden Symmetrie dessen) beschrieben ist, kann die Drehmomentstütze 1 auch mit anderen Symmetrien (beispielsweise eines gleichschenkligen und nicht gleichseitigen Dreiecks, oder eines rechtwinkligen Dreiecks) vorgesehen sein.

Obschon die drei Schenkel 1a, 1b, 1c bei der Ausführungsform identisch vorgesehen sind, können diese in der Form und im Aufbau voneinander abweichen.

Die Achsöffnung 7 kann auch versetzt zu dem Zentrum der Drehmomentstütze 1 vorgesehen sein. Dabei kann insbesondere die Mitte M des Lochs der Achsöffnung 7 versetzt oder verschoben zur geometrischen Mitte der Drehmomentstütze 1 vorgesehen sein.

Obschon die Symmetrie der Befestigungspunkte 2 als ein gleichseitiges Dreieck ausgebildet ist, kann auch ein anderes Dreieck als Grundform gewählt werden, beispielsweise ein gleichschenkliges (und nicht gleichseitiges) Dreieck oder ein rechtwinkliges Dreieck (je nach den mechanischen Anforderungen der konkreten Anwendung, die die auf die Drehmomentstütze 7 angreifenden Kräfte vorgeben).

Obschon die Achsöffnung 7 der drehbaren Lagerung einer Antriebsachse für ein Zubehör einer Biomasse-Heizanlage dient, kann die Achsöffnung 7 auch andere Achsen betreffend anderer Anwendungen aufnehmen. Damit kann die Drehmomentstütze 1 auch anders verwendet werden, solange ein Drehmoment einer Achse abgestützt werden soll.

In der Achsöffnung 7 kann optional ein Gleitlager, beispielsweise aus Kunststoff, vorgesehen sein.

Als Tragstruktur können alle Strukturen bezeichnet werden, die eine Befestigung eines Antriebs über eine Drehmomentstütze zulassen.

Die Dämmbuchsen 3 können je nach Anwendung auch weggelassen werden. Damit kann eine Befestigung der Drehmomentstütze 1 auch ohne eine Dämmbuchse 3 erfolgen.

Als Brennstoffe der Biomasse-Heizanlage können auch andere Brennstoffe als Hackgut oder Pellets verwendet werden.

Die hierin offenbarte(n) Ausführungsform(en) werden/wurden zur Beschreibung und zum Verständnis der offenbarten technischen Sachverhalte bereitgestellt und sollen den Umfang der vorliegenden Offenbarung nicht einschränken. Daher ist dies so auszulegen, dass der Umfang der vorliegenden Offenbarung jede Änderung oder andere verschiedene Ausführungsformen beinhaltet, die auf dem technischen Geist der vorliegenden Offenbarung basieren.

### (Bezugszeichenliste)

- 1: Drehmomentstütze
- 1a, 1b, 1c: Schenkel
- 2: Befestigungspunkte der Drehmomentstütze
- 3: Dämmbuchse
- 3a: Aufnahmeloch für die Kunststoffbuchse
- 4: Befestigungselement / Metallbolzen / Schraube
- 5: Befestigungslöcher für den Antrieb
- 5a: Befestigungselemente / Befestigungsbolzen / Befestigungsschrauben für den Antrieb
- 6: Seiten / Taillierungen
- 7: Achsöffnung
- 8: Basisplatte
- 9: Kröpfung
- 10: Zellenradschleuse
- 11: Gehäuse der Zellenradschleuse
- 12: Zellenrad
- 13: Antrieb
- 14: Getriebe
- 15: Achse
- 16: Mechanik für einen (nicht dargestellten) Schneckenantrieb
- 17: Brennstoffzufuhröffnung

- 20: Raumaustragungsvorrichtung
- 21: Brennstoffförderkanal
- 22: Aufhängung für die Drehmomentstütze
- 23: Auslass für den Brennstoff

## Patentansprüche

1. Drehmomentstütze (1) für eine Transporteinrichtung (10, 20) für Brennstoffe einer Biomasse-Heizanlage, aufweisend:
eine Basisplatte (8) mit drei Schenkeln (1a, 1b, 1c) und drei Seiten (6);
wobei die Basisplatte (8) eine Achsöffnung (7) zur Durchführung einer angetriebenen Achse (15) aufweist;
wobei die Basisplatte eine Mehrzahl von Befestigungslöchern (5) zur Befestigung eines Antriebs (13) aufweist;
wobei jeder der Schenkel (1a, 1b, 1c) ein Aufnahmeloch (3a) zur Aufnahme eines Befestigungselements zur abtriebseitigen Befestigung an einer Tragstruktur (11, 21) der Transporteinrichtung (10, 20) aufweist.

2. Drehmomentstütze (1) gemäß Anspruch 1,
wobei die Basisplatte (8) annähernd dreiecksförmig ausgebildet ist; und
wobei die Enden der dreiecksförmigen Basisplatte (8) durch die Enden der Schenkel (1a, 1b, 1c) ausgebildet sind.

3. Drehmomentstütze (1) gemäß einem der vorausgehenden Ansprüche,
wobei die Zentren der Aufnahmelöcher (3a) die Ecken eines gleichseitigen oder gleichschenkligen Dreiecks bilden.

4. Drehmomentstütze (1) gemäß einem der vorausgehenden Ansprüche,
wobei in einem Aufnahmeloch (3a) eine Dämmbuchse (3) zur Schalldämpfung vorgesehen ist.

5. Drehmomentstütze (1) gemäß einem der vorausgehenden Ansprüche,
wobei in jedem Aufnahmeloch (3a) jeweils eine Dämmbuchse (3) zur Schalldämpfung vorgesehen ist.

6. Drehmomentstütze (1) gemäß einem der vorausgehenden Ansprüche,
wobei die Basisplatte (8) in der Draufsicht annähernd die Form eines gleichschenkligen oder gleichseitigen Dreiecks aufweist.

7. Drehmomentstütze (1) gemäß einem der vorausgehenden Ansprüche,
wobei die Basisplatte (8) mit Ausnahme der Mehrzahl von Befestigungslöchern (5) drei Symmetrieachsen aufweist, die die Seitenhalbierenden der Seiten (6) darstellen, wobei die drei Symmetrieachsen die Mitte (M) der Drehmomentstütze (1) schneiden.

8. Drehmomentstütze (1) gemäß einem der vorausgehenden Ansprüche,
wobei das Zentrum der Achsöffnung (7) in der Mitte der Drehmomentstütze (1) und/oder der Mitte der Basisplatte (8) vorgesehen ist.

9. Drehmomentstütze (1) gemäß einem der vorausgehenden Ansprüche,
wobei die Mehrzahl von Befestigungslöchern (5) den gleichen Abstand zu der Mitte (M) der Drehmomentstütze (1) aufweist.

10. Drehmomentstütze (1) gemäß einem der vorausgehenden Ansprüche,
wobei die Seiten (6) tailliert vorgesehen sind.

11. Drehmomentstütze (1) gemäß einem der vorausgehenden Ansprüche,
wobei jeder der Schenkel (1a, 1b, 1c) eine Kröpfung (9) aufweist, wobei sich die Ebene der Basisplatte (8) mit den Aufnahmelöchern (3a) von der Ebene der Basisplatte (8) mit den Befestigungslöchern (5) zur Befestigung eines Antriebs (13) unterscheidet.

12. Drehmomentstütze (1) gemäß einem der vorausgehenden Ansprüche,
wobei die Dämmbuchsen (3) aus Kunststoff oder Gummi bestehen.

13. Zellenradschleuse (10) mit einer Drehmomentstütze (1) gemäß einem der vorausgehenden Ansprüche.

14. Raumaustragungsvorrichtung (20) mit einer Drehmomentstütze (1) gemäß einem der Ansprüche 1 bis 12.
